# EUROPEAN PATENT SPECIFICATION

(11) **EP 4 451 367 B1**
(45) Date of publication and mention of the grant of the patent: **12.08.2026**
(21) Application number: 23863483.6
(22) Date of filing: 06.09.2023
(51) Int. Cl.: H01M 4/134, H01M 4/62, H01M 4/38, H01M 4/1395, H01M 4/04, H01M 4/02, H01M 4/36, H01M 10/0525, H01M 10/42

(54) **NEGATIVE ELECTRODE FOR LITHIUM SECONDARY BATTERY, METHOD FOR MANUFACTURING NEGATIVE ELECTRODE FOR LITHIUM SECONDARY BATTERY, AND LITHIUM SECONDARY BATTERY COMPRISING NEGATIVE ELECTRODE**
NEGATIVELEKTRODE FÜR LITHIUMSEKUNDÄRBATTERIE, VERFAHREN ZUR HERSTELLUNG EINER NEGATIVELEKTRODE FÜR LITHIUMSEKUNDÄRBATTERIE UND LITHIUMSEKUNDÄRBATTERIE MIT NEGATIVELEKTRODE
ÉLECTRODE NÉGATIVE POUR BATTERIE SECONDAIRE AU LITHIUM, PROCÉDÉ DE FABRICATION D'ÉLECTRODE NÉGATIVE POUR BATTERIE SECONDAIRE AU LITHIUM, ET BATTERIE SECONDAIRE AU LITHIUM COMPRENANT UNE ÉLECTRODE NÉGATIVE

(30) Priority: 07.09.2022 KR 20220113647; 05.09.2023 KR 20230117635
(43) Date of publication of application: 23.10.2024
(73) Proprietor: LG Energy Solution, Ltd., Seoul 07335 (KR)
(72) Inventor: KIM, Young Jae, Daejeon 34122 (KR); KIM, Min Ji, Daejeon 34122 (KR); LEE, Jaewook, Daejeon 34122 (KR)
(74) Representative: Hoffmann Eitle
(86) International application number: PCT/KR2023/013295
(87) International publication number: WO 2024/054016

(56) References cited:
- JP-A- 2010 160 984
- JP-A- 2010 160 984
- KR-A- 20070 092 621
- KR-A- 20160 040 046
- KR-A- 20160 055 758
- KR-B1- 101 617 490
- KR-B1- 102 356 240
- US-A1- 2020 168 902
- HATEM AMLI ET AL: "BaTiO3-doped silicon nanocomposite anodes capacity enhancement for ultra-high capacity rechargeable lithium-ion batteries", THE JOURNAL OF ENGINEERING, 15 December 2021 (2021-12-15), Hoboken, USA, pages 348 - 358, XP093288226, ISSN: 2051-3305, Retrieved from the Internet <URL:https://ietresearch.onlinelibrary.wiley.com/doi/10.1049/tje2.12118> [retrieved on 20250620], DOI: 10.1049/tje2.12118

## Description

### [Technical Field]

This application claims priority to and the benefit of Korean Patent Application No. 10-2022-0113647 filed in the Korean Intellectual Property Office on September 7, 2022, and Korean Patent Application No. 10-2023-0117635 filed in the Korean Intellectual Property Office on September 5, 2023.

The present application relates to a negative electrode for a lithium secondary battery, a method for manufacturing a negative electrode for a lithium secondary battery, and a lithium secondary battery including a negative electrode.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, in response to the demand for high-density energy batteries in recent years, researches are being actively conducted on a method for increasing a capacity by using a silicon-based compound such as Si/C or SiOx having a capacity 10-fold or higher than that of a graphite-based material, in combination as a negative electrode active material. When compared with graphite that is typically used, however, the silicon-based compound that is a high-capacity material is excellent in capacity characteristic itself, but undergoes rapid volume expansion during a charging process to disconnect a conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that surface degradation is accelerated, and therefore, the performance needs to be improved in terms of battery cycle.

As described above, the silicon-based active material is a material with a much higher capacity than graphite that is the most widely used material in lithium secondary batteries. However, due to the problems described above, the process of destroying/regenerating the SEI layer continuously occurs. Accordingly, a larger amount of the electrolyte solution is used to regenerate the SEI layer, resulting in generation of a large amount of gas. When gas is generated, the electrode and the separator are separated due to the electrolyte solution, and as the gas is trapped, a distance between the positive electrode and the negative electrode increases, resulting in an increase in local resistance to cause a problem in that the life of the battery is drastically reduced.

Therefore, in order to solve the problem that occurs when a silicon-based compound is used as a negative electrode active material, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path. In addition, research is being conducted to supplement the life characteristics of the silicon-based negative electrode by limiting a proportion of the silicon-based active material used during initial charging and discharging by a method of pre-lithiating the silicon-based active material layer, and imparting a reservoir role.

However, since the above methods may make the performance of the battery rather deteriorate, there is a limitation in application, so that there is still a limitation in commercialization of manufacturing a negative electrode battery having a high content of a silicon-based compound. In particular, as the proportion of the silicon-based active material included in the silicon-based active material layer increases, pre-lithiation is concentrated on the surface of the negative electrode, so that the silicon-based active material on the surface is rather damaged, and as non-uniform pre-lithiation occurs, a problem with the improvement of life characteristics occurs.

Therefore, there is still a need for research on a method capable of solving the above-mentioned problems by suppressing gas generation even when the silicon-based compound is used as an active material.

### Prior Art Document

(Patent Literature 1) Japanese Patent Application Publication No. 2009-080971
(Patent Literature 2) Japanese Patent Application Publication No. 2010-160984
(Non-Patent Literature 1) Hatem A. et al., J. Eng. 2022;2022:348-358
(Patent Literature 4) Korean Patent Publication No. 10-1617490

### [Detailed Description of the Invention]

### [Technical Problem]

The present application relates to a negative electrode for a lithium secondary battery capable of suppressing gas generation by sensing generated gases (CO₂, H₂), which is a problem of the related art, and improving cycle performance along with capacity characteristics of a lithium secondary battery by improving uniformity during pre-lithiation, while using a silicon-based active material for a negative electrode, a method for manufacturing a negative electrode for a lithium secondary battery, and a lithium secondary battery including a negative electrode.

A negative electrode for a lithium secondary battery according to the present application solves the above problem by providing a specific ceramic layer on top of a negative electrode active material layer.

### [Technical Solution]

An exemplary embodiment of the present specification provides a negative electrode for a lithium secondary battery including: a negative electrode current collector layer; a silicon-based negative electrode active material layer provided on one surface or both surfaces of the negative electrode current collector layer; and a ceramic layer provided on a surface of the silicon-based negative electrode active material layer opposite to a surface facing the negative electrode current collector layer, wherein the ceramic layer includes a ceramic layer composition or a dried product thereof, wherein a thickness of the ceramic layer is **0.5** µm or greater and 10 µm or less, wherein the ceramic layer composition includes ceramic and a binder, and wherein BaTiO₃ is included in an amount of 10 parts by weight or more and 50 parts by weight or less on the basis of 100 parts by weight of the ceramic.

Another exemplary embodiment provides a method for manufacturing a negative electrode for a lithium secondary battery, the method including: preparing a negative electrode current collector layer; forming a negative electrode active material layer by applying a negative electrode active material layer composition to one surface or both surfaces of the negative electrode current collector layer; and forming a ceramic layer by applying a ceramic layer composition to a surface of the negative electrode active material layer opposite to a surface facing the negative electrode current collector layer, wherein a thickness of the ceramic layer is **0.5** µm or greater and 10 µm or less, wherein the ceramic layer composition includes ceramic and a binder, and wherein BaTiO₃ is included in an amount of 10 parts by weight or more and 50 parts by weight or less on the basis of 100 parts by weight of the ceramic.

Finally, there is provided a lithium secondary battery including a positive electrode; the negative electrode for a lithium secondary battery according to the present application; a separator provided between the positive electrode and the negative electrode; and an electrolyte.

### [Advantageous Effects]

The negative electrode for a lithium secondary battery according to an exemplary embodiment of the present invention has the silicon-based negative electrode active material layer, and includes the ceramic layer having a specific composition and thickness on top of the silicon-based negative electrode active material layer. Accordingly, a certain content of BaTiO₃ capable of sensing gas is included in the ceramic layer, so that a part of gas generated from the silicon-based negative electrode can be recovered, resulting in reduction in gas generation.

By including the ceramic layer that can suppress gas generation as described above, it is possible to suppress an increase in resistance and lithium precipitation due to an increase in electrode distance, which results from generation of bubbles and separation between the electrode and the separator. In addition, like an SRS layer of the separator, it is possible to bring about some stability effects, resulting in an additional stability increase in the battery.

Additionally, the ceramic layer incidentally reduces the direct contact points between the silicon-based negative electrode and the lithium metal to increase the charge/discharge uniformity of the silicon-based negative electrode, resulting in an improvement in performance.

Further, by providing the ceramic layer on top of the silicon-based negative active material layer, a ceramic layer formed on the separator can be eliminated or minimized, allowing a material thickness of the separator to be reduced, resulting in excellent features in terms of process and cost.

As a result, the negative electrode for a lithium secondary battery according to the present application is characterized by the introduction of the ceramic layer having a specific thickness and composition in order to take the advantages of an electrode to which a high content of Si particles is applied as a single-layer active material, and at the same time, to address issues of surface degradation, and uniformity during pre-lithiation and life characteristics due to gas generation, which issues are caused when the high content of Si particles is applied to the electrode.

### [Brief Description of Drawings]

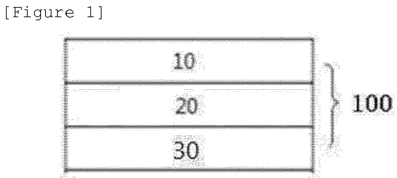

FIG. 1 shows a stack structure of a negative electrode for a lithium secondary battery according to an exemplary embodiment of the present application.

### <Explanation of Reference Numerals and Symbols>

10: ceramic layer
20: negative electrode active material layer
30: negative electrode current collector layer

### [Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention as defined in the appended claims may be embodied in various different forms, and is not limited to the following descriptions.

An exemplary embodiment of the present specification provides a negative electrode for a lithium secondary battery including: a negative electrode current collector layer; a silicon-based negative electrode active material layer provided on one surface or both surfaces of the negative electrode current collector layer; and a ceramic layer provided on a surface of the silicon-based negative electrode active material layer opposite to a surface facing the negative electrode current collector layer, wherein the ceramic layer includes a ceramic layer composition or a dried product thereof, wherein a thickness of the ceramic layer is 0.5 µm or greater and 10 µm or less, wherein the ceramic layer composition includes ceramic and a binder, and wherein BaTiO₃ is included in an amount of 10 parts by weight or more and 50 parts by weight or less on the basis of 100 parts by weight of the ceramic.

The negative electrode for a lithium secondary battery according to the present application is characterized by the introduction of the ceramic layer having a specific thickness and composition in order to take advantages of an electrode to which a high content of Si particles is applied as a single-layer active material, and at the same time, to address issues of surface degradation, and uniformity during pre-lithiation and life characteristics due to gas generation, which issues are caused when the high content of Si particles is applied to the electrode.

FIG. 1 shows a stack structure of a negative electrode for a lithium secondary battery according to an exemplary embodiment of the present application. Specifically, a negative electrode 100 for a lithium secondary battery can be seen which includes a ceramic layer 10 and a negative electrode active material layer 20 on one surface of a negative electrode current collector layer 30. FIG. 1 shows that the negative electrode active material layer is formed on one surface of the negative electrode current collector layer, but the negative electrode active material layer may be formed on both surfaces of the negative electrode current collector layer.

Below, the negative electrode for a lithium secondary battery of the present invention will be described in more detail.

The present application provides a negative electrode for a lithium secondary battery including: a negative electrode current collector layer; a silicon-based negative electrode active material layer provided on one surface or both surfaces of the negative electrode current collector layer; and a ceramic layer provided on a surface of the silicon-based negative electrode active material layer opposite to a surface facing the negative electrode current collector layer.

In an exemplary embodiment of the present application, the negative electrode current collector layer generally has a thickness of 1 µm to 100 µm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 µm or greater and 100 µm or less.

However, the thickness may be variously modified depending on a type and use of the negative electrode used, and is not limited thereto.

In an exemplary embodiment of the present application, there is provided the negative electrode for a lithium secondary battery in which the silicon-based negative electrode active material layer includes a negative electrode active material layer composition, and the negative electrode active material layer composition includes one or more selected from the group consisting of a silicon-based active material, a negative electrode conductive material and a negative electrode binder.

In an exemplary embodiment of the present application, the silicon-based active material may include one or more selected from the group consisting of SiOx (x=0), SiOx (0<x<2), SiC, and a Si alloy.

In an exemplary embodiment of the present application, the silicon-based active material may include one or more selected from the group consisting of SiOx (x=0), SiOx (0<x≤ 2) and a metal impurity, and may include 70 parts by weight or more of SiOx (x=0) on the basis of 100 parts by weight of the silicon-based active material.

In another exemplary embodiment, the silicon-based active material may include one or more selected from the group consisting of SiOx (x=0) and SiOx (0<x≤ 2), and may include 70 parts by weight or more of SiOx (x=0) on the basis of 100 parts by weight of the silicon-based active material.

In another exemplary embodiment, SiOx (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, on the basis of 100 parts by weight of the total silicon-based active material as described above, pure Si particles (SiOx (x=0)) not bonded to other particles or elements are included within the above range.

In an exemplary embodiment of the present application, the silicon-based active material may be composed of SiOx (x=0).

The capacity of the silicon-based active material is significantly higher than that of a graphite-based active material that is typically used, so that there have been more attempts to apply the same. However, the volume expansion rate of the silicon-based active material during charging/discharging is high, so that, for example, only a small amount thereof is mixed and used with a graphite-based active material.

The negative electrode active material layer according to the present application includes the silicon-based active material, and specifically, includes pure silicon particles including 70 parts by weight or more of SiOx (x=0). In this case, when a high content of pure silicon particles is included, the capacity characteristics are excellent, and in order to solve deterioration in life characteristics due to a resulting non-uniform surface reaction, the ceramic layer of the present invention is included.

In an exemplary embodiment of the present application, the crystal grain size of the silicon-based active material may be 200 nm or less.

In another exemplary embodiment, the crystal grain size of the silicon-based active material may be 200 nm or less, preferably 130 nm or less, more preferably 110 nm or less, still more preferably 100 nm or less, specifically 95 nm or less, and more specifically 91 nm or less. The crystal grain size of the silicon-based active material may have a range of 10 nm or greater, preferably 15 nm or greater.

The silicon-based active material has the crystal grain size described above, and the crystal grain size of the silicon-based active material may be controlled by changing a process condition in a manufacturing process. In this case, when the above range is satisfied, the crystal grain boundaries are widely distributed, and thus, the lithium ions can be uniformly intercalated during intercalating of lithium ions, thereby reducing the stress applied during intercalating of lithium ions into the silicon particles, and accordingly, mitigating breakage of the particles. As a result, characteristics capable of improving the life stability of the negative electrode are obtained. If the crystal grain size exceeds the above range, the crystal grain boundaries within the particles are narrowly distributed, and in this case, lithium ions are non-uniformly intercalated into the particles, leading to large stress during the intercalating of ions, and accordingly, breakage of particles.

In an exemplary embodiment of the present application, the silicon-based active material includes a crystal structure having a crystal grain distribution of 1 nm or greater and 200 nm or less, and an area ratio of the crystal structure based on a total area of the silicon-based active material may be 5% or less.

In another exemplary embodiment, the area ratio of the crystal structure based on the total area of the silicon-based active material may be 5% or less, or 3% or less, and 0.1% or greater.

That is, the silicon-based active material according to the present application has a crystal grain size of 200 nm or less, is formed so that the size of one crystal structure is small, and may satisfy the above area ratio. Accordingly, the distribution of the crystal grain boundaries may be widened, and accordingly, the above-described effects may be exhibited.

In an exemplary embodiment of the present application, the number of crystal structures included in the silicon-based active material may be 20 or more.

In another exemplary embodiment, the number of crystal structures included in the silicon-based active material may satisfy a range of 20 or more, 30 or more, or 35 or more, and 60 or less or 50 or less.

That is, as described above, when the crystal grain size of the silicon-based active material satisfies the above range and the number of crystal structures satisfies the above range, the silicon-based active material itself has strength within an appropriate range. Therefore, when such a silicon-based active material is included in an electrode, flexibility can be imparted and volume expansion can be effectively suppressed.

In the present application, the crystal grain refers to a crystal particle in a metal or material, which is a collection of microscopically irregular shapes, and the crystal grain size may mean a diameter of the observed crystal grain particle. That is, in the present application, the crystal grain size means a size of a domain sharing the same crystal direction in a particle, and has a different concept from a particle size or a size of a particle diameter expressing a size of a material.

In an exemplary embodiment of the present application, the crystal grain size can be calculated as a value of full width at half maximum (FWHM) through XRD analysis. The remaining values except L are measured through XRD analysis of the silicon-based active material, and the crystal grain size can be measured through the Debey-Scherrer equation showing that the FWHM and the crystal grain size are in inverse proportion. The Debey-Scherrer equation is as shown in Equation 1-1 below. $FWHM = Kλ / LCosθ$ in Equation 1-1,
L is the crystal grain size, K is a constant, θ is a Bragg angle, and λ means a wavelength of X-ray.

In addition, the shapes of the crystal grains are diverse and can be measured in three dimensions. In general, the size of the crystal grain can be measured by a generally used circle method or diameter measurement method, but the present invention is not limited thereto.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included on the line are counted, and crystal grains that are partially put (laid across) on the line are excluded. If the number of lines is P and the magnification is V, the average particle diameter can be calculated by Equation 1-2 below. $Dm = \left(L*P*{10}^{3}\right) / \left(zV\right) \left(um\right)$

In addition, the circle method is a method in which a circle with a predetermined diameter is drawn on a micrograph of a target particle, and then an average area of crystal grains is calculated by the number of crystal grains in the circle and the number of crystal grains laid across the boundary line, and the average area can be calculated by Equation 1-3 below. $Fm = \left(Fk*{10}^{6}\right) / \left(\left(0.67n+z\right) {V}^{2}\right) \left(μ{m}^{2}\right)$

In Equation 1-3, Fm is an average particle area, Fk is a measurement area on the photograph, z is the number of particles in a circle, n is the number of particles laid across the circle, and V is a magnification of a microscope.

In an exemplary embodiment of the present application, the silicon-based active material may have a specific surface area of 0.25 m²/g or greater.

In another exemplary embodiment, the silicon-based active material may have a specific surface area of 0.25 m²/g or greater, preferably 0.28 m²/g or greater, and more preferably 0.30 m²/g or greater, specifically 0.31 m²/g or greater, and more specifically 0.32 m²/g or greater. The silicon-based active material may satisfy a range of a specific surface area of 3 m²/g or less, preferably 2.5 m²/g or less, and more preferably 2.2 m²/g or less. The specific surface area may be measured according to DIN 66131 (using nitrogen).

The silicon-based active material has the specific surface area described above, and the specific surface area of the silicon-based active material may be controlled by changing a process condition of a manufacturing process and a growth condition of the silicon-based active material. That is, when the silicon-based active material is manufactured using the manufacturing method according to the present application, the rough surface results in a larger specific surface area, as compared with particles with the same particle size. In this case, the above range is satisfied, and thus, the bonding force with the binder increases, leading to reduction in cracks of an electrode due to repeating charge and discharge cycles.

In addition, the lithium ions can be uniformly intercalated during intercalation of lithium ions, resulting in reduction in stress applied during intercalation of lithium ions into the silicon particles, and accordingly, reduction in breakage of the particles. As a result, characteristics capable of improving the life stability of the negative electrode are obtained. If the specific surface area is less than the above range, the surface is formed smooth even with the same particle size, resulting in a decrease in the bonding force with the binder, and cracks of the electrode. In this case, lithium ions are non-uniformly intercalated into the particles, resulting in an increase in the stress due to the ion intercalation, and breakage of particles.

In an exemplary embodiment of the present application, the silicon-based active material satisfies a range in Equation 2-1 below. $X 1 / Y 1 \leq 0.960$ in Equation 2-1,
X1 refers to an actual area of the silicon-based active material, and Y1 refers to an area of a spherical particle with the same circumference as the silicon-based active material.

The measurement of Equation 2- 1 above may be performed using a particle shape analyzer. Specifically, the silicon-based active material according to the present application may be scattered on a glass plate through air injection, and then a shape of 10,000 silicon-based active material particles in a photograph obtained by capturing a shadow image of the scattered silicon-based active material particles may be measured. In this case, Equation 2-1 is a value expressing an average of 10,000 particles. Equation 2-1 according to the present application can be measured from the above image, and Equation 2-1 can be expressed as sphericity (circularity) of the silicon-based active material. The sphericity may also be expressed by [4π*actual area of silicon-based active material/(circumference)²].

In an exemplary embodiment of the present application, the sphericity of the silicon-based active material may be 0.960 or less, for example, 0.957 or less. The sphericity of the silicon-based active material may be 0.8 or higher, for example, 0.9 or higher, specifically 0.93 or higher, more specifically 0.94 or higher, for example, 0.941 or higher.

In an exemplary embodiment of the present application, the silicon-based active material satisfies a range in Equation 2-2 below. $X 2 / Y 2 \leq 0.995$ in Equation 2-2,
Y2 is the actual circumference of the silicon-based active material, and X2 is the circumference of the circumscribed figure of the silicon-based active material.

The measurement of Equation 2-2 above may be performed using a particle shape analyzer. Specifically, the silicon-based active material according to the present application may be scattered on a glass plate through air injection, and then a shape of 10,000 silicon-based active material particles in a photograph obtained by capturing a shadow image of the scattered silicon-based active material particles may be measured. In this case, Equation 2-2 is a value expressing an average of 10,000 particles. Equation 2-2 according to the present application can be measured from the above image, and Equation 2-2 can be expressed as convexity of the silicon-based active material.

In an exemplary embodiment of the present application, a range of X2/Y2≤0.996, preferably X2/Y2≤0.995 may be satisfied, and a range of 0.8≤X2/Y2, preferably 0.9≤X2/Y2, more preferably 0.95≤X2/Y2, specifically 0.98≤X2/Y2 may be satisfied.

The smaller the value of Equation 2-1 or Equation 2-2, the greater the roughness of the silicon-based active material may be meant. As the silicon-based active material with the above range is used, the bonding force with the binder increases, leading to reduction in cracks of the electrode due to the repeating of the charge/discharge cycle.

In an exemplary embodiment of the present application, the silicon-based active material may include silicon-based particles having a particle size distribution of 0.01 µm or greater and 30 µm or less.

The description 'the silicon-based active material includes silicon-based particles having a particle size distribution of 0.01 µm or greater and 30 µm or less' means including a plurality of individual silicon-based particles having a particle size within the above range, and the number of silicon-based particles included is not limited.

When the silicon-based particle is spherical, the particle size thereof can be expressed as its diameter. However, even when the silicon-based particle has a shape other than spherical, the particle size can be measured in contrast to the case of the spherical shape, and the particle size of the individual silicon-based particle can be measured by a method that is generally known in the art.

An average particle diameter (D50) of the silicon-based active material of the present invention may be 5 µm to 10 µm, specifically 5.5 µm to 8 µm, and more specifically 6 µm to 7 µm. If the average particle diameter is less than 5 µm, the specific surface area of the particle increases excessively, causing the viscosity of the negative electrode slurry to increase excessively. Accordingly, the particles constituting the negative electrode slurry are not smoothly dispersed. In addition, if the size of the silicon-based active material is excessively small, a contact area between the silicon particles and the conductive material is reduced due to the composite consisting of the conductive material and the binder in the negative electrode slurry, so that a disconnection possibility of the conductive network increases, thereby lowering the capacity retention rate. On the other hand, if the average particle diameter is greater than 10 µm, excessively large silicon particles exist, so that the surface of the negative electrode is not smooth, causing current density unevenness during charging and discharging. Additionally, if the silicon particles are excessively large, the phase stability of the negative electrode slurry becomes unstable, deteriorating processability. As a result, the capacity retention rate of the battery decreases.

In an exemplary embodiment of the present application, the silicon-based active material generally has a characteristic BET specific surface area. The BET specific surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, there is provided the negative electrode active material layer composition in which the silicon-based active material is included in an amount of 70 parts by weight or more on the basis of 100 parts by weight of the negative electrode active material composition.

In another exemplary embodiment, the silicon-based active material may be included in an amount of 70 parts by weight or more, preferably 75 parts by weight or more, and more preferably 80 parts by weight or more, and 95 parts by weight or less, preferably 90 parts by weight or less, and more preferably 85 parts by weight or less, on the basis of 100 parts by weight of the negative electrode active material layer composition.

Although the negative electrode active material layer composition according to the present application uses the silicon-based active material with a significantly high capacity within the above range, the negative electrode also uses a ceramic layer described below, thereby solving the problems of surface degradation during charging and discharging, and uniformity during pre-lithiation and gas generation without lowering the overall capacity performance of the negative electrode. In addition, the specific negative electrode conductive material and negative electrode binder capable of controlling the volume expansion rate during charging and discharging are used, so that even when the silicon-based active material is included within the above range, the negative electrode active material layer composition does not degrade the performance of the negative electrode, and has excellent output characteristics during charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1 below, in which A is an area and P is a boundary line. $4 πA / {P}^{2}$

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of a silicon-based active material, even when the characteristics of the silicon-based active material itself are adjusted as described above, the volume may rapidly expand during the charging/discharging, thereby causing some problems of damaging the conductive path formed in the negative electrode active material layer.

Therefore, in an exemplary embodiment of the present application, there is provided the negative electrode for a lithium secondary battery in which the negative electrode active material layer composition includes one or more selected from the group consisting of a negative electrode conductive material and a negative electrode binder.

In an exemplary embodiment of the present application, the negative electrode conductive material may include one or more selected from the group consisting of a particulate conductive material, a planar conductive material and a linear conductive material.

In an exemplary embodiment of the present application, the particulate conductive material refers to a conductive material that may be used for improving conductivity of the negative electrode, has conductivity without causing a chemical change and has a spherical or point shape. Specifically, the particulate conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 m²/g or greater and 70 m²/g or less, preferably 45 m²/g or greater and 65 m²/g or less, and more preferably 50 m²/g or greater and 60 m²/g or less.

In an exemplary embodiment of the present application, a content of the functional group (volatile matter) of the particulate conductive material may satisfy a range of 0.01% or more and 1% or less, preferably 0.01% or more and 0.3% or less, and more preferably 0.01% or more and 0.1% or less.

In particular, when the content of the functional group of the particulate conductive material satisfies the above range, a functional group is present on a surface of the particulate conductive material, so that the particulate conductive material can be smoothly dispersed in a solvent when water is used as the solvent.

In an exemplary embodiment of the present application, the particulate conductive material having the content of the functional group within the range described above is included together with the silicon-based active material, and the content of the functional group can be adjusted according to a degree of heat treatment of the particulate conductive material.

That is, in the manufacture of a particulate conductive material, a high functional group content may mean that a large amount of foreign materials are present, and a low functional group content may mean that heat treatment processing has been conducted more frequently.

In an exemplary embodiment of the present application, the particle diameter of the particulate conductive material may be 10 nm to 100 nm, preferably 20 nm to 90 nm, and more preferably 20 nm to 60 nm.

In an exemplary embodiment of the present application, the negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, the average particle diameter (D50) of the planar conductive material may be 2 µm to 7 µm, specifically 3 µm to 6 µm, and more specifically 4 µm to 5 µm. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, the planar conductive material may have D10 of 0.5 µm or greater and 1.5 µm or less, D50 of 2.5 µm or greater and 3.5 µm or less and D90 of 7.0 µm or greater and 15.0 µm or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m²/g or greater.

In another exemplary embodiment, the planar conductive material may have a BET specific surface area of 5 m²/g or greater and 500 m²/g or less, preferably 5 m²/g or greater and 300 m²/g or less, and more preferably 5 m²/g or greater and 250 m²/g or less.

In another exemplary embodiment, the planar conductive material is a planar conductive material with a high specific surface area, and the BET specific surface area may satisfy a range of 50 m²/g or greater and 500 m²/g or less, preferably 80 m²/g or greater and 300 m²/g or less, and more preferably 100 m²/g or greater and 300 m²/g or less.

In another exemplary embodiment, the planar conductive material is a planar conductive material with a low specific surface area, and the BET specific surface area may satisfy a range of 5 m²/g or greater and 40 m²/g or less, preferably 5 m²/g or greater and 30 m²/g or less, and more preferably 5 m²/g or greater and 25 m²/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In the exemplary embodiment of the present application, the linear conductive material may include SWCNT or MWCNT.

In an exemplary embodiment of the present application, there is provided the negative electrode active material layer composition in which the negative electrode conductive material is included in an amount of 10 parts by weight or more and 40 parts by weight or less on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 25 parts by weight or less on the basis of 100 parts by weight of the negative electrode active material layer composition.

In an exemplary embodiment of the present application, there is provided the negative electrode for a lithium secondary battery in which the negative electrode conductive material includes a planar conductive material and a linear conductive material and the planar conductive material is included in an amount of 80 parts by weight or more and 99.9 parts by weight or less on the basis of 100 parts by weight of the negative electrode conductive material.

In another exemplary embodiment, the planar conductive material may be included in an amount of 80 parts by weight or more and 99.9 parts by weight or less, preferably 90 parts by weight or more and 99.9 parts by weight or less, and more preferably 95 parts by weight or more and 99.9 parts by weight or less on the basis of 100 parts by weight of the negative electrode conductive material.

In another exemplary embodiment, the linear conductive material may be included in an amount of 0.1 part by weight or more and 20 parts by weight or less, preferably 0.1 part by weight or more and 10 parts by weight or less, and more preferably 0.1 part by weight or more and 5 parts by weight or less, on the basis of 100 parts by weight of the negative electrode conductive material.

In particular, in the exemplary embodiment of the present application, as the negative electrode conductive material includes the planar conductive material and the linear conductive material and the composition and ratio described above are satisfied, respectively, the lifespan characteristics of an existing lithium secondary battery are not significantly affected, and the number of points where charging and discharging are possible increases, so that output characteristics are excellent at a high C-rate.

The negative electrode conductive material according to the present application has a completely different configuration from a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the existing negative electrode active material. Specifically, the carbon-based active material that is used as the negative electrode active material may be artificial graphite or natural graphite, and refers to a material that is processed into a spherical or particulate shape and used for facilitating storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a particulate or spherical shape and used as a material for storing or releasing lithium.

That is, in an exemplary embodiment of the present application, artificial graphite or natural graphite, which is a carbon-based active material, has a particulate shape, and a BET specific surface area thereof may satisfy a range of 0.1 m²/g or greater and 4.5 m²/g or less. In addition, plate-like graphite, which is a planar conductive material, has a planar shape, and a BET specific surface area thereof may be 5 m²/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylenepropylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure in volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, and 10 parts by weight or more, on the basis of 100 parts by weight of the negative electrode active material layer composition.

In particular, the negative electrode binder according to the present application uses an aqueous binder as the silicon-based active material with high rigidity is used. The aqueous binder is a polymer that exhibits very high rigidity after drying. The negative electrode active material layer composition according to the present application includes the aqueous binder, and thus, if an aqueous ceramic layer is coated and dried on top of the aqueous silicon-based negative electrode active material layer, the surface will be mixed due to water and intermixing occurs no matter how quickly the ceramic layer is dried. In order to solve the above problem, the ceramic layer according to the present application uses an organic-based binder and an organic-based solvent to allow easy dispersion of the ceramic and the organic-based binder without affecting the aqueous negative electrode, leading to a very dense coating on the negative electrode active material layer.

In an exemplary embodiment of the present application, a ceramic layer provided on a surface of the silicon-based negative electrode active material layer opposite to a surface facing the negative electrode current collector layer is included.

As described above, the negative electrode for a lithium secondary battery according to the present application includes the ceramic layer, and also includes the above-described negative electrode active material, thereby solving the problems of surface degradation during charging and discharging, and uniformity during pre-lithiation and life characteristics due to gas generation while maintaining the characteristics of high capacity and high density.

Specifically, the biggest reason why gas is generated from a Si-based negative electrode is because the volume expansion/contraction of the Si active material is large, resulting in destruction and regeneration of an SEI layer. In other words, as the process of destroying/regenerating the SEI layer continuously proceeds and Si is used deeply, if particles are crushed, a reaction that a new Si surface is generated and accordingly a new SEI layer is generated occurs additionally. As a result, gas is generated and exists as resistance between electrodes, degrading performance. In order to solve the problem, a ceramic layer described below is used on top of the negative electrode active material layer.

In the present application, the ceramic layer includes a ceramic layer composition or a dried product thereof.

In this case, including the ceramic layer composition may mean that the ceramic layer includes the ceramic layer composition as is. In addition, including the dried product of the ceramic layer composition may mean a case in which all organic-based solvents that may be included in the ceramic layer composition are removed after drying and are not included in the ceramic layer.

A thickness of the ceramic layer is 0.5 µm or greater and 10 µm or less.

In an exemplary embodiment, the thickness of the ceramic layer may satisfy 0.5 µm or greater and 8 µm or less, and preferably 2 µm or greater and 6 µm or less.

When the thickness of the ceramic layer satisfies the above range as described above, the effect of improving stability can be obtained by controlling a rate of pre-lithiation during pre-lithiation. If the thickness of the ceramic layer exceeds the above range, problems such as deterioration in the performance of the negative electrode may occur, and the efficiency may be rather reduced during pre-lithiation. In addition, if the thickness of the ceramic layer is less than the above range, it is not easy to control the rate of pre-lithiation, which may lead to a problem of shortening the life due to electrode degradation resulting from a surface reaction on the top of the negative electrode active material layer.

In addition, it could be confirmed that gas adsorption characteristics were particularly excellent when the above range was satisfied.

The ceramic layer composition includes ceramic and a binder, and the ceramic includes 10 parts by weight or more and 50 parts by weight or less of BaTiO₃ on the basis of 100 parts by weight of the ceramic.

More specifically, the ceramic includes 10 parts by weight or more and 50 parts by weight or less, and may preferably include 15 parts by weight or more and 40 parts by weight or less, and more preferably 20 parts by weight or more and 35 parts by weight or less of BaTiO₃ on the basis of 100 parts by weight of the ceramic.

In an exemplary embodiment of the present application, the ceramic may be used without limitation as long as it can serve as a ceramic layer. However, there is provided the negative electrode for a lithium secondary battery in which the ceramic includes one or more selected from the group consisting of, specifically, Al₂O₃, ZrO₂, SiO₂, TiO₂, ZnO, BaTiO₃, SrTiO₃, CaCO₃, CaO, CeO₂, NiO, MgO, SnO₂, Y₂O₃, Pb(Zr,Ti)O₃(PZT), (Pb,La) (Zr,Ti)O₃(PLZT), Pb(Mg_{1/3}Nb_{2/3})O₃-PbTiO₃ (PMN-PT) and hafnia (HfO₂).

As described above, various ceramics can be used without limitation, but among them, the present invention is characterized in that BaTiO₃ is included in an amount of the weight part described above. The ceramic includes BaTiO₃, which has the most effective structure for containing the gas generated from the negative electrode, in an amount of parts by weight as described above, and is thus very excellent in gas adsorption properties, and can also have a feature of being able to serve as a buffer layer when it further includes another ceramic.

In an exemplary embodiment of the present application, the ceramic includes BaTiO₃ and Al₂O₃, and includes BaTiO₃ in an amount of 10 parts by weight or more and 50 parts by weight or less on the basis of 100 parts by weight of the ceramic.

Specifically, the ceramic includes BaTiO₃ and Al₂O₃ and may satisfy a weight ratio of BaTiO₃: Al₂O₃=80:20.

In an exemplary embodiment of the present application, the ceramic layer composition may further include a solvent. In this case, all solvents may be removed when forming a ceramic layer.

In an exemplary embodiment of the present application, there is provided the negative electrode for a lithium secondary battery in which the solvent includes one or more selected from the group consisting of N-methyl pyrrolidone (NMP), dimethyl formamide (DMF), acetone, and dimethyl acetamide.

In an exemplary embodiment of the present application, there is provided the negative electrode for a lithium secondary battery in which the binder is polyvinylidene fluoride (PVdF) or polyvinylidene fluoride-hexafluoropropylene (PVdF-HFP).

In an exemplary embodiment of the present application, there is provided the negative electrode for a lithium secondary battery in which an adhesive strength is 98 mN/15 nm (10 gf/15 mm) or higher and 980 mN/15 mm (100 gf/15 mm) or less after bonding to lithium metal on a surface of the ceramic layer opposite to a surface facing the negative electrode active material layer and then allowing to stand at 23°C for 10 seconds to 2 minutes.

The adhesive strength was measured at an angle of 90° and at a rate of 5 mm/s with a peel strength measuring apparatus using a 3M 9070 tape. Specifically, one surface of a lithium metal layer of a negative electrode in which the lithium metal layer was stacked on top of the ceramic layer was bonded to one surface of a slide glass (3M 9070 tape) to which an adhesive film was attached. Then, it was attached by reciprocating a 2 kg rubber roller 5 to 10 times, and the adhesive strength (peeling strength) was measured at a rate of 5 mm/s in an angular direction of 90°. In this case, the adhesive strength can be measured under conditions of 23°C and normal pressure.

In an exemplary embodiment of the present application, the normal pressure may mean a pressure in a state where a specific pressure is not applied or lowered, and may be used as the same sense as the atmospheric pressure. The normal pressure may be usually expressed as 1 atm.

In an exemplary embodiment of the present application, the adhesive strength may be 98 mN/15 mm (10 gf/15 mm) or higher and 980 mN/15 mm (100 gf/15 mm) or less, preferably 147 mN/15 mm (15 gf/15 mm) or higher and 932 mN/15 mm (95 gf/15 mm) or less, and more preferably 196 mN/15 mm (20 gf/15 mm) or higher and 490 mN/15 mm (50gf/15mm) or less after bonding to lithium metal on the surface of the ceramic layer opposite to the surface facing the negative electrode active material layer and then allowing to stand at 23°C for 10 seconds to 2 minutes.

As described above, the adhesive strength between the ceramic layer and the lithium metal satisfies the above range, so when transferring lithium metal during the pre-lithiation process, especially using the transfer process, the favorable adhesive strength between the lithium metal and the ceramic layer ensures transferability and does not cause problems such as reverse transferring, allowing a smooth pre-lithiation process.

In an exemplary embodiment of the present application, there is provided the negative electrode for a lithium secondary battery in which the ceramic is included in an amount of 60 parts by weight or more and 95 parts by weight or less and the binder is included in an amount of 5 parts by weight or more and 40 parts by weight or less on the basis of 100 parts by weight of the ceramic layer composition.
In this case, the organic-based solvent included in the ceramic layer composition is not an active substance, so 100 parts by weight of the ceramic layer composition may mean parts by weight including only the ceramic and binder.

In an exemplary embodiment of the present application, the ceramic may satisfy 60 parts by weight or more and 95 parts by weight or less, preferably 65 parts by weight or more and 90 parts by weight or less, and more preferably 70 parts by weight or more and 90 parts by weight or less on the basis of 100 parts by weight of the ceramic layer composition.

In an exemplary embodiment of the present application, the binder may satisfy 5 parts by weight or more and 40 parts by weight or less, preferably 10 parts by weight or more and 35 parts by weight or less, and more preferably 10 parts by weight or more and 30 parts by weight or less on the basis of 100 parts by weight of the ceramic layer composition.

The ceramic layer composition includes the binder and ceramic in the above contents as described above, so the binder and ceramic is improved in terms of the dispersibility and formed uniformly in the ceramic layer, allowing the rate of pre-lithiation to be smoothly controlled and satisfying an appropriate viscosity range to improve the coating density when coating the ceramic layer.

In an exemplary embodiment of the present application, a thickness of the negative electrode active material layer may be 10 µm or greater and 200 µm or less.

In an exemplary embodiment of the present application, the negative electrode for a lithium secondary battery may be a pre-lithiated negative electrode.

An exemplary embodiment of the present application provides a method for manufacturing a negative electrode for a lithium secondary battery, the method including: preparing a negative electrode current collector layer; forming a negative electrode active material layer by applying a negative electrode active material layer composition to one surface or both surfaces of the negative electrode current collector layer; and forming a ceramic layer by applying a ceramic layer composition to a surface of the negative electrode active material layer opposite to a surface facing the negative electrode current collector layer, wherein a thickness of the ceramic layer is 0.5 µm or greater and 10 µm or less, wherein the ceramic layer composition includes ceramic and a binder, and wherein BaTiO₃ is included in an amount of 10 parts by weight or more and 50 parts by weight or less on the basis of 100 parts by weight of the ceramic.

In the method for manufacturing a negative electrode, the above-described descriptions may be applied to the composition and content included in each step.

An exemplary embodiment of the present application includes forming a negative electrode active material layer by applying a negative electrode active material layer composition on one surface or both surfaces of the negative electrode current collector layer.

That is, the above step is a step of forming a negative electrode active material layer on the negative electrode current collector layer, and may mean forming the active material layer on a surface facing the current collector layer.

In an exemplary embodiment of the present application, the applying of the negative electrode active material layer composition may include applying and drying a negative electrode slurry including a negative electrode active material layer composition, and a negative electrode slurry solvent.

In this case, a solid content of the negative electrode slurry may satisfy a range of 10% to 40%.

In an exemplary embodiment of the present application, the forming of the negative electrode active material layer may include mixing the negative electrode slurry, and coating the mixed negative electrode slurry on one surface or both surfaces of the negative electrode current collector layer, and the coating may be performed using a coating method that is commonly used in the art.

Thereafter, an exemplary embodiment of the present application includes forming a ceramic layer by applying a ceramic layer composition on a surface of the negative electrode active material layer opposite to a surface facing the negative electrode current collector layer.

In an exemplary embodiment of the present application, there is provided the method for manufacturing a negative electrode for a lithium secondary battery including drying an organic-based solvent in the ceramic layer composition through drying and rolling after applying the ceramic layer composition.

In an exemplary embodiment of the present application, the negative electrode slurry solvent may be used without limitation as long as it can dissolve and disperse the negative electrode active material layer composition, and specifically, water or NMP may be used.

In an exemplary embodiment of the present application, there is provided the method for manufacturing a negative electrode for a lithium secondary battery, the method including pre-lithiating a negative electrode in which the negative electrode active material layer and the ceramic layer are formed on the negative electrode current collector layer, wherein the step of pre-lithiating the negative electrode includes a lithium electroplating process, a lithium metal transfer process, a lithium metal deposition process, or a stabilized lithium metal powder (SLMP) coating process.

The negative electrode for a lithium secondary battery as described above includes SiOx (x=0) for enhancing capacity characteristics as the negative electrode active material layer and includes the ceramic layer with the specific composition and thickness described above, so that it can retain the advantages of rapid charging as they are. That is, as compared with a case where only a negative electrode active material layer is applied, the ceramic layer has the above composition, enabling a uniform pre-lithiation process on top of the negative electrode and thus further improving the life.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on the compositions and contents of the silicon-based active material, negative electrode conductive material and negative electrode binder included in the negative electrode active material layer, and accordingly, the electrode has the electrical conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

The secondary battery according to the exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector, and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.6); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.6) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 µm or greater.

For example, the average particle diameter (D50) of the single particles may be 1 µm or greater and 12 µm or less, 1 µm or greater and 8 µm or less, 1 µm or greater and 6 µm or less, greater than 1 µm and 12 µm or less, greater than 1 µm and 8 µm or less, or greater than 1 µm and 6 µm or less.

Even when the single particles are formed with a small average particle diameter (D50) of 1 µm or greater and 12 µm or less, the particle strength may be excellent. For example, the single particle may have a particle strength of 100 to 300 MPa when roll-pressing with a force of 6,374 N/ cm² (650 kgf/cm²). Accordingly, even when the single particles are roll-pressed with a strong force of 6,374 N/ cm² (650 kgf/cm²), the phenomenon of increased micro-particles in an electrode due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than a temperature during manufacturing of the secondary particles. For example, when the composition of the precursor is the same, the firing should be performed at a temperature higher than a temperature during manufacturing of the secondary particles by about 30°C to 100°C. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from aggregation of tens to hundreds of primary particles, and is a concept including a single particle consisting of one primary particle and a quasi-single particle form that is an aggregate of 30 or less primary particles.

Specifically, in the present invention, the single particle may be a single particle consisting of one primary particle or a quasi-single particle form that is an aggregate of 30 or less primary particles, and the secondary particle may be an aggregate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an aggregate of 30 or less primary particles, and the secondary particle may be an aggregate form of hundreds of primary particles.

The above-described lithium composite transition metal compound may further include secondary particles. The secondary particle means a form formed by aggregation of primary particles, and can be distinguished from the concept of a single particle including one primary particle, one single particle and a quasi-single particle form, which is an aggregate of 30 or less primary particles.

The secondary particle may have a particle diameter (D50) of 1 µm to 20 µm, 2 µm to 17 µm, and preferably 3 µm to 15 µm. The specific surface area (BET) of the secondary particles may be 0.05 m²/g to 10 m²/g, preferably 0.1 m²/g to 1 m²/ g, and more preferably 0.3 m²/g to 0.8 m²/g.

In a further exemplary embodiment of the present application, the secondary particle is an aggregate of primary particles, and the average particle diameter (D50) of the primary particles is 0.5 µm to 3 µm. Specifically, the secondary particle may be an aggregate form of hundreds of primary particles, and the average particle diameter (D50) of the primary particles may be 0.6 µm to 2.8 µm, 0.8 µm to 2.5 µm, or 0.8 µm to 1.5 µm.

When the average particle diameter (D50) of the primary particles satisfies the above range, a single-particle positive electrode active material having excellent electrochemical properties can be formed. If the average particle diameter (D50) of the primary particles is too small, the number of aggregates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, the phenomenon of increased micro-particles in an electrode due to particle breakage is alleviated, thereby improving the lifetime characteristic of the battery.

In the exemplary embodiment of the present application, the average particle diameter (D50) of the single particles is smaller than the average particle diameter (D50) of the secondary particles by 1 µm to 18 µm.

For example, the average particle diameter (D50) of the single particles may be 1 µm to 16 µm smaller, 1.5 µm to 15 µm smaller, or 2 µm to 14 µm smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the phenomenon of increased micro-particles in an electrode due to particle breakage is alleviated, thereby improving the lifetime characteristic and the energy density of the battery.

According to a further exemplary embodiment of the present application, the single particles are included in an amount of 15 parts by weight to 100 parts by weight on the basis of 100 parts by weight of the positive electrode active material. The single particles may be included in an amount of 20 parts by weight to 100 parts by weight, or 30 parts by weight to 100 parts by weight on the basis of 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more on the basis of 100 parts by weight of the positive electrode active material. The single particles may be included in an amount of 100 parts by weight or less on the basis of 100 parts by weight of the positive electrode active material.

When the single particles are included within the above range, excellent battery characteristics may be exhibited in combination with the negative electrode material described above. In particular, when the single particles are included in an amount of 15 parts by weight or more, the phenomenon of increased micro-particles in an electrode due to particle breakage in a roll-pressing process after fabrication of an electrode can be alleviated, thereby improving the lifetime characteristics of the battery.

In the exemplary embodiment of the present application, the lithium composite transition metal compound may further include secondary particles, and the secondary particles may be included in an amount of 85 parts by weight or less on the basis of 100 parts by weight of the positive electrode active material. The secondary particles may be included in an amount of 80 parts by weight or less, 75 parts by weight or less, or 70 parts by weight or less on the basis of 100 parts by weight of the positive electrode active material. The secondary particles may be included in an amount of 0 part by weight or more on the basis of 100 parts by weight of the positive electrode active material.

When the above range is satisfied, the above-described effects due to the existence the single particles in the positive electrode active material can be maximized. In the case in which the positive electrode active material of the secondary particles is included, the components thereof may be the same as or different from those exemplified in the single-particle positive electrode active material described above, and may mean an aggregate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

In particular, by providing the ceramic layer on top of the silicon-based negative active material layer according to the present application, a ceramic layer formed on the separator can be eliminated or minimized, allowing a material thickness of the separator to be reduced, resulting in excellent features in terms of process and cost.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope of the present claims included herein.

### <Examples>

### <Preparation of Negative Electrode>

### Example 1: Preparation of Negative Electrode

### <Preparation of Negative Electrode Active Material Layer>

A negative electrode active material layer composition was prepared using Si (average particle diameter (D50): 5 µm) as a silicon-based active material, a first conductive material, a second conductive material, and polyacrylamide as a binder at a weight ratio of 80:9.6:0.4:10. A negative electrode slurry was manufactured by adding the composition to distilled water as a solvent for forming a negative electrode slurry (solid concentration: 28 wt%).

The first conductive material was plate-like graphite (specific surface area: 17 m²/g, average particle diameter (D50): 3.5 µm), and the second conductive material was carbon nanotubes.

As a mixing method, the first conductive material, the second conductive material, the binder and water were dispersed at 2500 rpm for 30 minutes by using a homo mixer, the active material was added thereto, and the resultant mixture was dispersed at 2500 rpm for 30 minutes to fabricate a slurry.

The negative electrode slurry was coated on both surfaces of a copper current collector (thickness: 15 µm) serving as a negative electrode current collector with a loading amount of 3.00 mg/cm², which was then roll-pressed and dried in a vacuum oven at 130°C for 10 hours to form a negative electrode active material layer (thickness: 23 µm).

### Preparation of Ceramic Layer

A ceramic layer composition with BaTiO₃:Al₂O₃ as ceramic mixed at parts by weight of 20:80 on the basis of 100 parts by weight of ceramic and PVdF as a binder included in an amount of 20 parts by weight on the basis of 100 parts by weight of the ceramic layer composition was prepared. Then, it was added to acetone as a solvent to fabricate a ceramic layer composition. (solid concentration: 18% by weight)

Then, the ceramic layer composition was coated on top of the negative electrode active material layer, which was then roll-pressed and dried in a vacuum oven at 60°C for 10 hours to form a ceramic layer (thickness: 4 µm).

A negative electrode was prepared in the same manner as in Example 1 except that, in Example 1, preparation conditions of the negative electrode active material layer and the ceramic layer were changed as described below.

**[Table 1]**

| | Ceramic layer | | | Negative electrode active material layer |
|---|---|---|---|---|
| | ceramic (weight ratio) | binder (part by weight) | thickness (µm) | composition |
| Example 1 | BaTiO₃:Al₂O₃ =20:80 | PVdF (20) | 4 | Same as Example 1 |
| Example 2 | BaTiO₃:Al₂O₃ =35:65 | PVdF (20) | 4 | Same as Example 1 |
| Example 3 | BaTiO₃:Al₂O₃ =20:80 | PVdF (20) | 6 | Same as Example 1 |
| Example 4 | BaTiO₃:Al₂O₃ =20:80 | PVdF (20) | 2 | Same as Example 1 |
| Example 5 | BaTiO₃:Al₂O₃ =20:80 | PVdF (20) | 4 | Si (average particle diameter (D50): 5 µm) as silicon-based active material, first conductive material, second conductive material and polyacrylamide as binder = 85:7.6:0.4:7 |
| Example 6 | BaTiO₃:Al₂O₃ =20:80 | PVdF (20) | 4 | Si (average particle diameter (D50): 5 µm) as silicon-based active material, first conductive material, second conductive material and polyacrylamide as binder = 87:5.8:0.2:7 |
| Example 7 | BaTiO₃:Al₂O₃ =30:70 | PVdF (20) | 4 | Si (average particle diameter (D50): 5 µm) as silicon-based active material, first conductive material, second conductive material and polyacrylamide as binder = 85:7.6:0.4:7 |
| Example 8 | BaTiO₃:Al₂O₃ =30:70 | PVdF (20) | 4 | Si (average particle diameter (D50): 5 µm) as silicon-based active material, first conductive material, second conductive material and polyacrylamide as binder = 87:5.8:0.2:7 |
| Comparative Example 1 | BaTiO₃:Al₂O₃ =55:45 | PVdF (20) | 4 | Same as Example 1 |
| Comparative Example 2 | BaTiO₃:Al₂O₃ =5:95 | PVdF (20) | 4 | Same as Example 1 |
| Comparative Example 3 | BaTiO₃ | PVdF (20) | 4 | Same as Example 1 |
| Comparative Example 4 | Al₂O₃ | PVdF (20) | 4 | Same as Example 1 |
| Comparative Example 5 | BaTiO₃:Al₂O₃ =55:45 | PVdF (20) | 10.5 | Same as Example 1 |
| Comparative Example 6 | BaTiO₃:Al₂O₃ =55:45 | PVdF (20) | 0.4 | Same as Example 1 |
| Comparativ | BaTiO₃:Al₂O₃ | PVdF | 4 | Si (average |
| e Example 7 | =8:82 | (20) | | particle diameter (D50): 5 µm) as silicon-based active material, first conductive material, second conductive material and polyacrylamide as binder = 87:5.8:0.2:7 |
| Comparativ e Example 8 | BaTiO₃:Al₂O₃ =8:82 | PVdF (20) | 4 | Same as Example 1 |
| Comparative Example 9 | Al₂O₃=100 | PVdF (20) | 4 | Si (average particle diameter (D50): 5 µm) as silicon-based active material, first conductive material, second conductive material and polyacrylamide as binder = 65:14.6:0.4:20 |

### <Manufacture of Secondary Battery>

A positive electrode slurry was prepared by adding LiNi_{0.6}Co_{0.2}Mn_{0.2}O₂ (average particle diameter (D50): 15 µm) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry in a weight ratio of 97:1.5:1.5 (solid concentration: 78 wt%).

The positive electrode slurry was coated on both surfaces of an aluminum current collector (thickness: 12 µm) serving as a positive electrode current collector with a loading amount of 537 mg/25 cm², which was then roll-pressed and dried in a vacuum oven at 130°C for 10 hours to form a positive electrode active material layer (thickness: 65 µm), whereby a positive electrode was manufactured (thickness of the positive electrode: 77 µm, porosity: 26%) .

A secondary battery of Example 1 was manufactured by interposing a polyethylene separator between the positive electrode and the negative electrode of Example 1 and injecting an electrolyte.

The electrolyte was obtained by adding vinylene carbonate to an organic solvent, in which fluoroethylene carbonate (FEC) and diethyl carbonate (DEC) were mixed in a volume ratio of 30:70, in an amount of 3 wt.% on the basis of a total weight of the electrolyte and adding LiPF₆ as a lithium salt to a concentration of 1M.

Secondary batteries were prepared in the same manner as described above, respectively, except that the negative electrodes of Examples 2 to 4 and Comparative Examples 1 to 6 were used.

### Experimental Example 1: Evaluation on monocell life

For the secondary batteries prepared above, the life and the capacity retention rate were evaluated using an electrochemical charging and discharging device. This evaluation was conducted at high temperature and was intended to be evaluated in connection with a gas generation experiment in Experimental Example 2, which will be described below. The secondary batteries were subjected to 100 cycles under conditions of charging (1.0C CC/CV charging, 4.2 V, 0.05C Cut) and discharging (0.5C CC discharging, 3.0V Cut) at 45°C and then the capacity retention rates thereof were confirmed.

The 100th capacity retention rate was evaluated using the formula below, and the results are shown in Table 2 below. 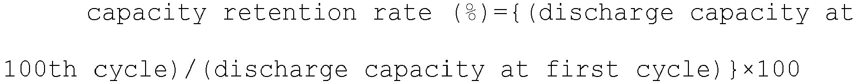 capacity retention rate (%)={ (discharge capacity at 100th cycle)/(discharge capacity at first cycle) }×100

**[Table 2]**

| | Capacity retention rate @ 100 cycle number |
|---|---|
| Example 1 | 92.5 |
| Example 2 | 91.7 |
| Example 3 | 91.2 |
| Example 4 | 93.7 |
| Example 5 | 88.5 |
| Example 6 | 86.1 |
| Example 7 | 89.9 |
| Example 8 | 87.4 |
| Comparative Example 1 | 83.1 |
| Comparative Example 2 | 76.9 |
| Comparative Example 3 | 77.4 |
| Comparative Example 4 | 72.7 |
| Comparative Example 5 | 76.8 |
| Comparative Example 6 | 78.2 |
| Comparative Example 7 | 73.1 |
| Comparative Example 8 | 75.5 |
| Comparative Example 9 | 78.4 |

Life evaluation is usually conducted at room temperature, 25°C. However, since gas is significantly generated by a side reaction only after a long life elapses, life evaluation was conducted at high temperatures where more gases are generated. At high temperatures, a significant difference could be confirmed because more reactions to form SEI layers occurred along with gas generation by the side reaction, and this corresponded to an evaluation that made it easier to check the effect on ceramic particles.

In the result of the life evaluation in Table 2, it could be confirmed that the performance of the Examples was superior to that of the Comparative examples. Among the Examples, Example 1 in which BaTiO₃ with small particles and Al₂O₃ with relatively large particles were provided in the optimal ratio showed the best performance, and it could be confirmed in Example 4 that if the ceramic composition was the same and the thickness was thin, the resistance according to the thickness of the separator ceramic layer decreased and some performance increased.

In addition, Examples 5 to 8 each correspond to a case in which the content of silicon was increased, and accordingly, the ratio of BaTiO₃ was also increased. That is, in Examples 5 to 8, it can be confirmed that as the content of the silicon-based active material increases, the amounts of conductive material and binder decrease, resulting in some decrease in performance, as compared with Examples 1 to 4, but it could be confirmed that the capacity retention rate is very excellent, as compared with the Comparative Examples.

In Comparative Example 1, the proportion of BaTiO₃ was high, so the gas might be effectively removed. However, since the particles are small, the packing density of the ceramic layer was increased and the migration of ions was blocked, resulting in lower ionic conductivity and lower life performance.

In Comparative Example 2, the proportion of BaTiO₃ was relatively low, so the resistance of the separator was low. However, gas generation could not be effectively suppressed, and a local gas trap was generated between the electrode and the separator, resulting in lower life performance.

In Comparative Example 3, BaTiO₃ alone was provided, and the resistance of the battery was evaluated as being high due to the same effect as in Comparative Example 1. In Comparative Example 4, like Comparative Example 2, there was no major problems with resistance, but gas generation could not be suppressed.

In Comparative Examples 5 and 6, the composition was the same as in Comparative Example 1, but the thickness was larger or smaller. It is determined that if the thickness is large, as in Comparative Example 5, performance deteriorates due to increased resistance, and if the thickness is very thin, as in Comparative Example 6, the absolute amount of BaTiO₃ is very small, and therefore, a similar trend to Comparative Example 2, where the content of BaTiO₃ is very low, is exhibited.

### Experimental Example 2: Gas Analysis Result (after 100-cycle life of monocell)

Analysis was conducted to check the gas generation state after the 100-cycle life of the previously evaluated monocell. Gas analysis was performed qualitatively using GC/MS equipment, and 11 types of gases (H₂, CO, CO₂, CH₄, C₂H₂, C₂H₄, C₂H₆, C₃H₆, C₃H₈, O₂, N₂), which produce the most gas through a reaction with an electrolyte solution, were analyzed, and results are shown in Table 3 below.

**[Table 3]**

| | Total amount of gas (total amount of 11 types of gases) |
|---|---|
| Example 1 | 65.4 |
| Example 2 | 58.7 |
| Example 3 | 60.1 |
| Example 4 | 86.8 |
| Example 5 | 93.4 |
| Example 6 | 97.5 |
| Example 7 | 52.4 |
| Example 8 | 56.1 |
| Comparative Example 1 | 58.2 |
| Comparative Example 2 | 241.9 |
| Comparative Example 3 | 55.9 |
| Comparative Example 4 | 589.0 |
| Comparative Example 5 | 55.5 |
| Comparative Example 6 | 250.4 |
| Comparative Example 7 | 427.1 |
| Comparative Example 8 | 314.8 |
| Comparative Example 9 | 578.5 |

As a result of the gas analysis, it could be confirmed that the amount of gas generation was small in the Examples in which the content of BaTiO₃ was appropriate and the thickness was appropriate. In addition, it could be confirmed that the amount of gas generation was smaller in Example 2 in which the content of BaTiO₃was high and in Example 3 in which the thickness of the ceramic layer was large, so the composition was small but the quantitative amount of BaTiO₃ was large, as compared with Example 1. In Example 4 in which the thickness was relatively thin and the composition of BaTiO₃ was 20, the amount of gas generation was larger, as compared with Examples 1 to 3.

Most of the Comparative Examples showed the larger amount of gas generation, as compared with the Examples, which is a result of the quantitative amount of BaTiO₃. Comparative Example 1, Comparative Example 3, and Comparative Example 5 correspond to cases where the composition content of BaTiO₃ is high or is a single composition, or the absolute amount thereof is high due to the large thickness, and in this case, the total amount of gas generation similar to the Examples is shown.

However, in Comparative Examples 2, 4 and 6 in which the composition content of Al₂O₃ is high or is a single composition, or the amount of BaTiO₃ is small due to the small thickness, it could be confirmed that the amount of gas generation was large, and it was determined to affect the life performance.

That is, as can be seen from Tables 2 and 3, the battery using the negative electrode according to the present application is excellent in life retention rate, and at the same time, has performance improved by suppressing gas generation.

## Claims

1. A negative electrode for a lithium secondary battery comprising:
a negative electrode current collector layer;
a silicon-based negative electrode active material layer provided on one surface or both surfaces of the negative electrode current collector layer; and
a ceramic layer provided on a surface of the silicon-based negative electrode active material layer opposite to a surface facing the negative electrode current collector layer,
wherein the ceramic layer comprises a ceramic layer composition or a dried product thereof, and
wherein the ceramic layer composition comprises ceramic and a binder,
**characterized in that**:
a thickness of the ceramic layer is 0.5 µm or greater and 10 µm or less, and
BaTiO₃ is included in an amount of 10 parts by weight or more and 50 parts by weight or less on the basis of 100 parts by weight of the ceramic.

2. The negative electrode for a lithium secondary battery of claim 1, wherein the ceramic comprises one or more selected from the group consisting of Al₂O₃, ZrO₂, SiO₂, TiO₂, ZnO, BaTiO₃, SrTiO₃, CaCO₃, CaO, CeO₂, NiO, MgO, SnO₂, Y₂O₃, Pb(Zr,Ti)O₃(PZT), (Pb,La) (Zr,Ti)O₃(PLZT), Pb(Mg_{1/3}Nb_{2/3})O₃-PbTiO₃(PMN-PT) and hafnia (HfO₂).

3. The negative electrode for a lithium secondary battery of claim 1, wherein the binder is polyvinylidene fluoride (PVdF) or polyvinylidene fluoride-hexafluoropropylene (PVdF-HFP).

4. The negative electrode for a lithium secondary battery of claim 1, wherein the ceramic is included in an amount of 60 parts by weight or more and 95 parts by weight or less and the binder is included in an amount of 5 parts by weight or more and 40 parts by weight or less on the basis of 100 parts by weight of the ceramic layer composition.

5. The negative electrode for a lithium secondary battery of claim 1, wherein an adhesive strength is 98 mN/15 mm (10 gf/15 mm) or higher and 980 mN/15 mm (100 gf/15 mm) or less after bonding to lithium metal on a surface of the ceramic layer opposite to a surface facing the silicon-based negative electrode active material layer and then allowing to stand at 23°C for 10 seconds to 2 minutes as described in the specification.

6. The negative electrode for a lithium secondary battery of claim 1, wherein the silicon-based negative electrode active material layer comprises a negative electrode active material layer composition, and
wherein the negative electrode active material layer composition comprises one or more selected from the group consisting of a silicon-based active material, a negative electrode conductive material, and a negative electrode binder.

7. The negative electrode for a lithium secondary battery of claim 6, wherein the silicon-based active material comprises one or more selected from the group consisting of SiOx (x=0) and SiOx (0<x≤2), and comprises 70 parts by weight or more of the SiOx (x=0) on the basis of 100 parts by weight of the silicon-based active material.

8. The negative electrode for a lithium secondary battery of claim 6, wherein the negative electrode conductive material comprises a planar conductive material and a linear conductive material, and
wherein the planar conductive material is included in an amount of 80 parts by weight or more and 99.9 parts by weight or less on the basis of 100 parts by weight of the negative electrode conductive material.

9. The negative electrode for a lithium secondary battery of claim 6, wherein the silicon-based active material is included in an amount of 70 parts by weight or more on the basis of 100 parts by weight of the negative electrode active material layer composition.

10. A method for manufacturing a negative electrode for a lithium secondary battery, the method comprising:
preparing a negative electrode current collector layer;
forming a negative electrode active material layer by applying a negative electrode active material layer composition on one surface or both surfaces of the negative electrode current collector layer; and
forming a ceramic layer by applying a ceramic layer composition on a surface of the negative electrode active material layer opposite to a surface facing the negative electrode current collector layer,
wherein the ceramic layer composition comprises ceramic and a binder, and
**characterized in that**:
a thickness of the ceramic layer is 0.5 µm or greater and 10 µm or less, and
BaTiO₃ is included in an amount of 10 parts by weight or more and 50 parts by weight or less on the basis of 100 parts by weight of the ceramic.

11. The method of claim 10, comprising drying a solvent in the ceramic layer composition through drying and rolling after applying the ceramic layer composition.

12. The method of claim 10, comprising pre-lithiating a negative electrode having the negative electrode active material layer and ceramic layer formed on the negative electrode current collector layer,
wherein the pre-lithiating of the negative electrode comprises a lithium electroplating process, a lithium metal transfer process, a lithium metal deposition process, or a stabilized lithium metal powder (SLMP) coating process.

13. A lithium secondary battery comprising:
a positive electrode;
the negative electrode for a lithium secondary battery of any one of claims 1 to 9;
a separator provided between the positive electrode and the negative electrode; and
an electrolyte.

## Patentansprüche

1. Negative Elektrode für eine Lithiumsekundärbatterie, umfassend:
eine Stromabnehmerschicht für eine negative Elektrode;
eine Aktivmaterialschicht für eine negative Elektrode auf Basis von Silicium, die auf einer Oberfläche oder beiden Oberflächen der Stromabnehmerschicht für eine negative Elektrode bereitgestellt ist; und
eine Keramikschicht, die auf einer Oberfläche der Aktivmaterialschicht für eine negative Elektrode auf Basis von Silicium gegenüberliegend einer Oberfläche, die der Stromabnehmerschicht für eine negative Elektrode zugewandt ist, bereitgestellt ist,
worin die Keramikschicht eine Zusammensetzung für eine Keramikschicht oder ein getrocknetes Produkt davon umfasst, und
die Zusammensetzung für eine Keramikschicht Keramik und ein Bindemittel umfasst,
**dadurch gekennzeichnet, dass**:
eine Dicke der Keramikschicht 0,5 µm oder mehr und 10 µm oder weniger beträgt, und
BaTiO₃ in einer Menge von 10 Gewichtsteilen oder mehr und 50 Gewichtsteilen oder weniger, basierend auf 100 Gewichtsteilen der Keramik, enthalten ist.

2. Negative Elektrode für eine Lithiumsekundärbatterie gemäß Anspruch 1, worin die Keramik eines oder mehrere umfasst, ausgewählt aus der Gruppe, bestehend aus Al₂O₃, ZrO₂, SiO₂, TiO₂, ZnO, BaTiO₃, SrTiO₃, CaCO₃, CaO, CeO₂, NiO, MgO, SnO₂, Y₂O₃, Pb(Zr,Ti)O₃(PZT), (Pb,La)(Zr,Ti)O₃(PLZT), Pb(Mg_{1/3}Nb_{2/3})O₃-PbTiO₃ (PMN-PT) und Hafnia (HfO₂).

3. Negative Elektrode für eine Lithiumsekundärbatterie gemäß Anspruch 1, worin das Bindemittel Polyvinylidenfluorid (PVdF) oder Polyvinylidenfluorid-Hexafluorpropylen (PVdF-HFP) ist.

4. Negative Elektrode für eine Lithiumsekundärbatterie gemäß Anspruch 1, worin die Keramik in einer Menge von 60 Gewichtsteilen oder mehr und 95 Gewichtsteilen oder weniger enthalten ist und das Bindemittel in einer Menge von 5 Gewichtsteilen oder mehr und 40 Gewichtsteilen oder weniger, basierend auf 100 Gewichtsteilen der Zusammensetzung für die Keramikschicht, enthalten ist.

5. Negative Elektrode für eine Lithiumsekundärbatterie gemäß Anspruch 1, worin die Haftfestigkeit nach dem Verbinden mit Lithiummetall auf einer Oberfläche der Keramikschicht, die einer der Aktivmaterialschicht für eine negative Elektrode auf Basis von Silicium zugewandten Oberfläche gegenüberliegt, und anschließendem Stehenlassen bei 23 °C für 10 Sekunden bis 2 Minuten, wie in der Beschreibung angegeben, 98 mN/15 mm (10 gf/15 mm) oder höher und 980 mN/15 mm (100 gf/15 mm) oder weniger beträgt.

6. Negative Elektrode für eine Lithiumsekundärbatterie gemäß Anspruch 1, worin die Aktivmaterialschicht für eine negative Elektrode auf Basis von Silicium eine Zusammensetzung für eine Aktivmaterialschicht für eine negative Elektrode umfasst, und
worin die Zusammensetzung für eine Aktivmaterialschicht für eine negative Elektrode eines oder mehrere umfasst, ausgewählt aus der Gruppe, bestehend aus einem Aktivmaterial auf Basis von Silicium, einem leitfähigen Material für eine negative Elektrode und einem Bindemittel für eine negative Elektrode.

7. Negative Elektrode für eine Lithiumsekundärbatterie gemäß Anspruch 6, worin das Aktivmaterial auf Basis auf Silicium eines oder mehrere umfasst, ausgewählt aus der Gruppe, bestehend aus SiOx (x=0) und SiOx (0<x≤2), und 70 Gewichtsteile oder mehr des SiOx (x=0), basierend auf 100 Gewichtsteilen des Aktivmaterials auf Basis von Silicium, umfasst.

8. Negative Elektrode für eine Lithiumsekundärbatterie gemäß Anspruch 6, worin das leitfähige Material für eine negative Elektrode ein planares leitfähiges Material und ein lineares leitfähiges Material umfasst, und
worin das planare leitfähige Material in einer Menge von 80 Gewichtsteilen oder mehr und 99,9 Gewichtsteilen oder weniger, basierend auf 100 Gewichtsteilen des leitfähigen Materials für eine negative Elektrode, enthalten ist.

9. Negative Elektrode für eine Lithiumsekundärbatterie gemäß Anspruch 6, worin das Aktivmaterial auf Basis von Silicium in einer Menge von 70 Gewichtsteilen oder mehr, basierend auf 100 Gewichtsteilen der Zusammensetzung für ein Aktivmaterial für eine negative Elektrode, enthalten ist.

10. Verfahren zur Herstellung einer negativen Elektrode für eine Lithiumsekundärbatterie, wobei das Verfahren umfasst:
das Vorbereiten einer Stromabnehmerschicht für eine negative Elektrode;
das Ausbilden einer Aktivmaterialschicht für eine negative Elektrode durch Auftragen einer Zusammensetzung für eine Aktivmaterialschicht für eine negative Elektrode auf eine Oberfläche oder beide Oberflächen der Stromabnehmerschicht für eine negative Elektrode; und
das Ausbilden einer Keramikschicht durch Auftragen einer Zusammensetzung für eine Keramikschicht auf eine Oberfläche der Aktivmaterialschicht für eine negative Elektrode, die der Oberfläche gegenüberliegt, die der Stromabnehmerschicht für eine negative Elektrode zugewandt ist,
worin die Zusammensetzung für eine Keramikschicht Keramik und ein Bindemittel umfasst, und
**dadurch gekennzeichnet, dass**:
eine Dicke der Keramikschicht 0,5 µm oder mehr und 10 µm oder weniger beträgt, und
BaTiO₃ in einer Menge von 10 Gewichtsteilen oder mehr und 50 Gewichtsteilen oder weniger, basierend auf 100 Gewichtsteilen der Keramik, enthalten ist.

11. Verfahren gemäß Anspruch 10, umfassend das Trocknen eines Lösungsmittels in der Zusammensetzung für eine Keramikschicht durch Trocknen und Walzen nach dem Auftragen der Zusammensetzung für eine Keramikschicht.

12. Verfahren gemäß Anspruch 10, umfassend die Vorlithiierung einer negativen Elektrode, die eine Aktivmaterialschicht und eine Keramikschicht auf der Stromabnehmerschicht für eine negative Elektrode aufweist,
worin die Vorlithiierung der negativen Elektrode ein Lithium-Galvanisierungsverfahren, ein Lithiummetall-Transferverfahren, ein Lithiummetall-Abscheidungsverfahren oder ein Beschichtungsverfahren mit stabilisiertem Lithiummetallpulver (SLMP) umfasst.

13. Lithiumsekundärbatterie, umfassend:
eine positive Elektrode;
die negative Elektrode für eine Lithiumsekundärbatterie gemäß einem der Ansprüche 1 bis 9;
einen Separator, der zwischen der positiven Elektrode und der negativen Elektrode bereitgestellt ist; und
einen Elektrolyten.

## Revendications

1. Électrode négative pour batterie secondaire au lithium comprenant :
une couche de collecteur de courant d'électrode négative ;
une couche de matériau actif d'électrode négative à base de silicium fournie sur une surface ou les deux surfaces de la couche de collecteur de courant d'électrode négative ; et
une couche céramique fournie sur une surface de la couche de matériau actif d'électrode négative à base de silicium opposée à une surface faisant face à la couche de collecteur de courant d'électrode négative,
dans laquelle la couche céramique comprend une composition de couche céramique ou un produit séché de celle-ci, et
dans laquelle la composition de couche céramique comprend une céramique et un liant,
**caractérisée en ce que** :
une épaisseur de la couche céramique est 0,5 µm ou plus et 10 µm ou moins, et
du BaTiO₃ est inclus dans une quantité de 10 parties en poids ou plus et de 50 parties en poids ou moins sur la base de 100 parties en poids de la céramique.

2. Électrode négative pour batterie secondaire au lithium selon la revendication 1, dans laquelle la céramique comprend un ou plusieurs éléments sélectionnés dans le groupe consistant en Al₂O₃, ZrO₂, SiO₂, TiO₂, ZnO, BaTiO₃, SrTiO₃, CaCO₃, CaO, CeO₂, NiO, MgO, SnO₂, Y₂O₃, Pb(Zr, Ti)O₃(PZT), (Pb, La) (Zr, Ti)O₃(PLZT), Pb(Mg_{1/3}Nb_{2/3})O₃-PbTiO₃(PMN-PT) et oxyde de hafnium (HfO₂).

3. Électrode négative pour batterie secondaire au lithium selon la revendication 1, dans laquelle le liant est du fluorure de polyvinylidène (PVdF) ou du fluorure de polyvinylidène-hexafluoropropylène (PVdF-HFP).

4. Électrode négative pour batterie secondaire au lithium selon la revendication 1, dans laquelle la céramique est incluse dans une quantité de 60 parties en poids ou plus et de 95 parties en poids ou moins et le liant est inclus dans une quantité de 5 parties en poids ou plus et de 40 parties en poids ou moins sur la base de 100 parties en poids de la composition de couche céramique.

5. Électrode négative pour batterie secondaire au lithium selon la revendication 1, dans laquelle une force adhésive est de 98 mN/15 mm (10 gf/15 mm) ou plus et de 980 mN/15 mm (100 gf/15 mm) ou moins après mise en liaison avec du lithium métal sur une surface de la couche céramique opposée à une surface faisant face à la couche de matériau actif d'électrode négative à base de silicium, puis maintien au repos à 23 °C pendant 10 s à 2 min tel que décrit dans la spécification.

6. Électrode négative pour batterie secondaire au lithium selon la revendication 1, dans laquelle la couche de matériau actif d'électrode négative à base de silicium comprend une composition de couche de matériau actif d'électrode négative, et
dans laquelle la composition de couche de matériau actif d'électrode négative comprend un ou plusieurs éléments sélectionnés dans le groupe consistant en un matériau actif à base de silicium, un matériau conducteur d'électrode négative, et un liant d'électrode négative.

7. Électrode négative pour batterie secondaire au lithium selon la revendication 6, dans laquelle le matériau actif à base de silicium comprend un ou plusieurs éléments sélectionnés dans le groupe consistant en SiOx (x = 0) et SiOx (0 < x ≤ 2), et comprend 70 parties en poids ou plus du SiOx (x = 0) sur la base de 100 parties en poids du matériau actif à base de silicium.

8. Électrode négative pour batterie secondaire au lithium selon la revendication 6, dans laquelle le matériau conducteur d'électrode négative comprend un matériau conducteur planaire et un matériau conducteur linéaire, et
dans laquelle le matériau conducteur planaire est inclus dans une quantité de 80 parties en poids ou plus et de 99,9 parties en poids ou moins sur la base de 100 parties en poids du matériau conducteur d'électrode négative.

9. Électrode négative pour batterie secondaire au lithium selon la revendication 6, dans laquelle le matériau actif à base de silicium est inclus dans une quantité de 70 parties en poids ou plus sur la base de 100 parties en poids de la composition de couche de matériau actif d'électrode négative.

10. Procédé de fabrication d'une électrode négative pour une batterie secondaire au lithium, le procédé comprenant :
la préparation d'une couche de collecteur de courant d'électrode négative ;
la formation d'une couche de matériau actif d'électrode négative par application d'une composition de couche de matériau actif d'électrode négative sur une surface ou les deux surfaces de la couche de collecteur de courant d'électrode négative ; et
la formation d'une couche céramique par application d'une composition de couche céramique sur une surface de la couche de matériau actif d'électrode négative opposée à une surface faisant face à la couche de collecteur de courant d'électrode négative,
dans lequel la composition de couche céramique comprend une céramique et un liant, et
**caractérisé en ce que** :
une épaisseur de la couche céramique est 0,5 µm ou plus et 10 µm ou moins, et
du BaTiO₃ est inclus dans une quantité de 10 parties en poids ou plus et de 50 parties en poids ou moins sur la base de 100 parties en poids de la céramique.

11. Procédé selon la revendication 10, comprenant le séchage d'un solvant dans la composition de couche céramique par séchage et laminage après application de la composition de couche céramique.

12. Procédé selon la revendication 10, comprenant la pré-lithiation d'une électrode négative présentant la couche de matériau actif d'électrode négative et la couche céramique formées sur la couche de collecteur de courant d'électrode négative,
dans lequel la pré-lithiation de l'électrode négative comprend un processus d'électrodéposition de lithium, un processus de transfert de lithium métal, un processus de dépôt de lithium métal, ou un processus de revêtement par poudre de lithium métal stabilisée (SLMP).

13. Batterie secondaire au lithium comprenant :
une électrode positive ;
l'électrode négative pour batterie secondaire au lithium selon l'une quelconque des revendications 1 à 9 ;
un séparateur fourni entre l'électrode positive et l'électrode négative ; et
un électrolyte.
